# FASCICULE DE BREVET EUROPEEN

(11) **EP 2 199 631 B1**
(45) Date de publication et mention de la délivrance du brevet: **26.10.2011**
(21) Numéro de dépôt: 09290961.3
(22) Date de dépôt: 17.12.2009
(51) Int. Cl.: F16C 33/60, F16C 33/66, F16C 33/78, F16C 33/80, F16C 43/04, D03C 1/14

(54) **Roulement comportant un déflecteur muni de pions équipés de moyens d'accrochage élastique**
Wälzlager umfassend Deflektor mit Bolzen, welche mit elastischen Befestigungsmitteln ausgestattet sind
Rolling bearing comprising a deflector provided with pins having elastic attachment means

(30) Priorité: 17.12.2008 FR 0807097
(43) Date de publication de la demande: 23.06.2010
(73) Titulaire: SNR Roulements, 74000 Annecy (FR)
(72) Inventeur: Bertucchi, Guilllaume, 74000 Annecy (FR); Spetebroodt, Colas, 74000 Annecy (FR)
(74) Mandataire: Broydé, Marc

(56) Documents cités:
- EP-A- 0 602 711
- FR-A- 511 962
- FR-A- 518 859
- FR-A- 1 539 010
- FR-A- 2 913 079
- FR-A- 2 914 031

## Description

### DOMAINE TECHNIQUE DE L'INVENTION

L'invention concerne un roulement, et plus particulièrement un roulement équipé de déflecteurs permettant un maintien axial relatif entre les bagues, extérieure et intérieure.

L'invention concerne également une articulation oscillante d'un métier à tisser comportant un tel roulement.

### ÉTAT DE LA TECHNIQUE

De manière connue, les roulements mécaniques comprennent une bague intérieure et une bague extérieure formant entre elles un espace de roulement dans lequel sont disposés des corps roulants. Pour certaines applications présentant des contraintes d'encombrement axial importantes, les roulements ne sont pas équipés de collets permettant de maintenir axialement les bagues et de les centrer l'une par rapport à l'autre par l'intermédiaire des corps roulants.

Dans ces circonstances, il est connu d'utiliser des déflecteurs permettant d'assurer le guidage de la bague extérieure par rapport à la bague intérieure, d'une part, et de constituer une barrière étanche entre l'espace de roulement et l'extérieur de sorte à éviter les intrusions de polluants dans le roulement et limiter les fuites de lubrifiant de l'intérieur vers l'extérieur du roulement par centrifugation, d'autre part. Ces déflecteurs permettent en outre d'éviter le démontage accidentel du roulement.

La demande de brevet français N° 0754021 avec numéro de publication 2914031 A au nom de la demanderesse propose de fixer des déflecteurs présentant une forme de rondelle annulaire sur la bague intérieure. La fixation des déflecteurs est ici assurée par un sertissage des rondelles annulaires sur la bague intérieure au niveau des zones de fixation. Toutefois, l'opération de sertissage nécessite la présence de zones de sertissage sur la bague intérieure qui augmentent l'encombrement axial du roulement. En outre, l'opération de sertissage accroît la complexité du montage du roulement.

Par ailleurs, la demande de brevet français FR 2913079 propose de munir le bague intérieure d'une gorge annulaire radiale apte à maintenir, par une liaison élastique, une portion radiale intérieure d'un déflecteur. Ce document propose également de sertir ou de souder les déflecteurs sur la bague intérieure. Toutefois, ces solutions ne sont pas non plus satisfaisantes en ce que la gorge annulaire radiale ou les zones de sertissage ou de soudage augmentent l'encombrement axial du roulement et en ce que le montage de tels roulements reste relativement complexe.

Par ailleurs, dans de nombreuses application, les roulements sont souvent pourvus d'une cage disposée dans l'espace de roulement, entre la bague intérieure et la bague extérieure. La cage comporte des alvéoles de logement des corps roulants et peut être équipée de déflecteurs permettant d'assurer un maintien axial relatif entre les bagues et l'étanchéité de l'espace de roulement. Toutefois, la présence d'une cage diminue le volume de l'espace de roulement attribué aux corps roulants, de sorte que le nombre de corps roulants est moindre pour un diamètre primitif donné. Cette solution n'est donc pas totalement satisfaisante lorsque l'on cherche à maximiser le nombre de corps roulant pour un diamètre donné, afin d'augmenter la capacité du roulement.

### OBJET DE L'INVENTION

L'invention vise à remédier aux inconvénients de l'état de la technique en proposant un roulement compatible avec des charges élevées, évitant les fuites de lubrifiant et présentant un encombrement réduit.

À cet effet, et selon un premier aspect, l'invention propose un roulement comportant une bague intérieure et une bague extérieure coaxiales formant entre elles un espace de roulement dans lequel des corps roulants sont disposés pour permettre la rotation relative desdites bagues intérieure et extérieure, au moins un déflecteur annulaire fixe par rapport à l'une desdites bagues, dite de référence, le déflecteur s'étendant radialement jusqu'à une face latérale extérieure de l'autre bague pour fermer latéralement au moins partiellement l'espace de roulement. La bague de référence comporte au moins un alésage et le déflecteur comporte au moins un pion équipé de moyens d'accrochage élastique pénétrant dans ledit alésage de sorte à fixer ledit déflecteur.

Ainsi, le déflecteur peut être monté de manière simple et peu encombrante. Le déflecteur peut être utilisé pour assurer le guidage de l'autre bague par rapport à la bague de référence et/ou une étanchéité entre le volume de roulement et l'extérieur.

En outre, selon l'invention, le déflecteur n'est pas monté par l'intermédiaire de cage s'étendant dans l'espace de roulement de sorte que le roulement ainsi obtenu peut tenir des charges plus importantes.

Avantageusement, le roulement comporte un premier et un second déflecteurs s'étendant de part et d'autre des bagues et présentant chacun au moins un pion équipé de moyens d'accrochage élastique. Ainsi, les déflecteurs permettent d'assurer intégralement le guidage des bagues.

Dans un premier mode de réalisation, le premier et le second déflecteurs sont solidarisés l'un à l'autre, des moyens d'accrochage élastique du premier déflecteur coopérant au travers dudit alésage avec des moyens d'accrochage élastique du second déflecteur. Cette solution est relativement avantageuse car elle permet notamment de fixer le premier et le second déflecteur lors d'une même opération de montage.

Avantageusement, le premier déflecteur est identique au second déflecteur. Cette réalisation simplifie les opérations de fabrication et de montage des déflecteurs sur le roulement, puisqu'il n'existe ainsi qu'une référence de déflecteur pouvant être monté indifféremment d'un côté ou de l'autre du roulement.

Dans un second mode de réalisation, les moyens d'accrochage élastique coopèrent avec des moyens de retenue formés dans l'alésage.

Avantageusement, le déflecteur est en contact axial avec la surface latérale extérieure de l'autre bague pour assurer un guidage axial de l'autre bague par rapport à la bague de référence.

Le déflecteur peut être rigide, ou apte à se déformer légèrement de façon élastique dans le sens axial pour assurer un centrage de l'autre bague par rapport à la bague de référence. Selon une variante avantageuse, le déflecteur présente une lèvre radiale élastiquement déformable en direction axiale en contact axial avec la face latérale extérieure de l'autre bague.

Avantageusement, l'autre bague présente au moins une surface, cylindrique ou tronconique, d'étanchéité sans contact et le déflecteur présente une surface annulaire correspondante en regard et à distance de la surface d'étanchéité sans contact de sorte à assurer l'étanchéité dynamique de l'espace de roulement. On peut également combiner la lèvre radiale avec la surface annulaire du déflecteur pour former avec la surface d'étanchéité sans contact un chicanage d'étanchéité. Ainsi, le roulement selon l'invention garantit une étanchéité maximale de l'espace de roulement.

Avantageusement, le déflecteur comporte une cavité de réception d'un lubrifiant, bordant l'espace de roulement. Dans un mode avantageux, une garniture solide de lubrification est logée dans la cavité de réception du déflecteur, ladite garniture étant réalisée dans un matériau formé d'une matrice polymère solide comprenant des pores dans lesquels un lubrifiant se trouve emprisonné.

Avantageusement, le roulement présente une pluralité d'alésages équirépartis sur le corps de la bague de référence.

La bague de référence est de préférence la bague intérieure. Il est en effet préférable de former les alésages dans la bague intérieure car la formation des alésages dans la bague extérieure nécessiterait une augmentation de l'épaisseur radiale de la bague extérieure qui aurait tendance à diminuer la capacité de chargement en corps roulant du roulement pour un diamètre extérieur donné du roulement, et à augmenter le moment d'inertie du roulement.

Avantageusement, les corps roulants sont des rouleaux cylindriques. En effet, ces corps roulants permettent de tenir des charges importantes tout en conservant un certain degré de liberté axial limité par les déflecteurs. Toutefois, l'invention est également applicable à des roulements à billes ou à rouleaux coniques.

Avantageusement, le déflecteur présente un diamètre extérieur supérieur ou égal au diamètre extérieur de la bague extérieure, ceci afin de protéger la bague extérieure et d'éviter un éventuel contact avec un élément mobile fixé à la bague intérieure.

Selon un second aspect, l'invention concerne également une articulation oscillante d'un métier à tisser comportant :
- une agrafe pourvue d'un logement ;
- un roulement comme précédemment décrit, dont la bague extérieure est disposée dans le logement de l'agrafe ; et
- une bielle comportant deux chapes latérales, les deux chapes s'étendant dans des plans perpendiculaires à l'axe de rotation et étant disposées axialement de part et d'autre du roulement, en regard et à distance des déflecteurs et de la bague extérieure et fixées à la bague intérieure du roulement.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue schématique en perspective d'un roulement selon un premier mode de réalisation, dans lequel un des déflecteurs est dissocié du roulement ;
- la figure 2 est une vue schématique en perspective du roulement de la figure 1, dans lequel l'autre déflecteur est dissocié de l'assemblage
- la figure 3 est une vue schématique, en coupe axiale, du roulement des figures 1 et 2 ;
- la figure 4 est une vue schématique, en coupe axiale, d'un roulement selon un second mode de réalisation ;
- la figure 5 est une vue schématique de la face latérale intérieure d'un déflecteur selon le mode de réalisation des figures 1 à 3.

### EXEMPLES DE RÉALISATION

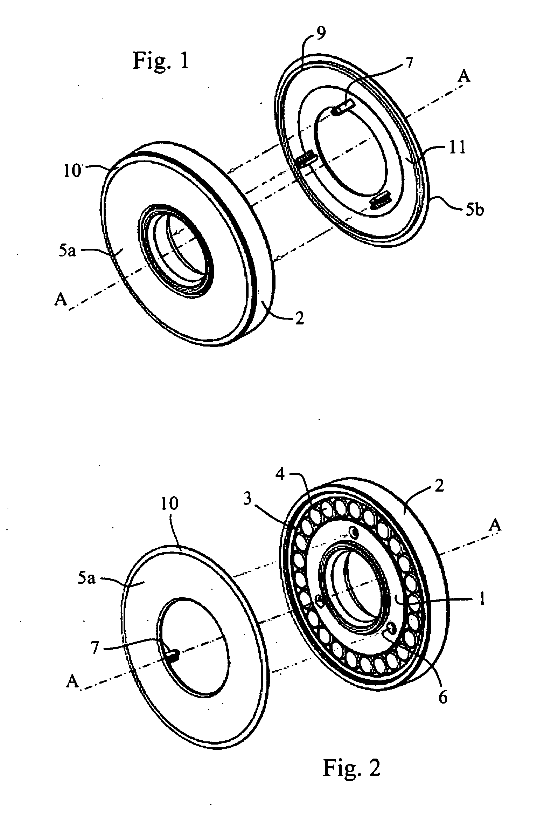

Le roulement, représenté sur les figures 1 à 5, comprend une bague intérieure 1, une bague extérieure 2 disposée de manière coaxiale à la bague intérieure 1 et des corps roulants 4 disposés dans un espace de roulement 3 formé entre les bagues, intérieure 1 et extérieure 2, de sorte à permettre la rotation relative desdites bagues 1, 2. Le roulement définit un axe géométrique de rotation, référencé A, qui servira pour l'ensemble de la description.

La bague intérieure 1 comporte un orifice central, de fixation sur une bielle par exemple, et un chemin de roulement 12 cylindrique tourné radialement vers l'extérieur et définissant la paroi intérieure de l'espace de roulement 3.

La bague extérieure 2 présente un chemin de roulement 13 cylindrique tourné radialement vers l'intérieur et définissant la paroi extérieure de l'espace de roulement 3.

Dans le mode de réalisation représenté, les corps roulants 4 sont des rouleaux cylindriques dont la surface cylindrique est propre à rouler sur les chemins de roulement de la bague intérieure 1 et de la bague extérieure 2. De préférence, pour maximiser la charge, les corps roulants sont disposés de manière jointive et remplissent tout l'espace de roulement 3.

En outre, de manière avantageuse, la bague intérieure 1 et la bague extérieure 2 ne présentent pas d'épaulement bordant le chemin de roulement cylindrique 12, 13, de sorte à former un collet, et permettant d'assurer un guidage axial des corps roulants 4. En effet, la présence de tels épaulements augmenterait la dimension axiale du roulement, ce qui n'est pas souhaitable dans les applications pour lesquelles l'encombrement est limité.

Le roulement comporte également deux déflecteurs annulaires 5a, 5b s'étendant latéralement, de part et d'autre des bagues extérieure 2 et intérieure 1. En d'autres termes, les déflecteurs 5a, 5b s'étendent perpendiculairement à l'axe géométrique A du roulement, de part et d'autre des faces latérales des bagues 1, 2. Les déflecteurs 5a, 5b présentent une double fonction. D'une part, ils assurent le guidage de la bague extérieure 2 par rapport à la bague intérieure 1. D'autre part, ils constituent une barrière étanche entre l'espace de roulement 3 et l'extérieur de sorte à éviter les intrusions de polluants dans le roulement et limiter les fuites de lubrifiant de l'intérieur vers l'extérieur du roulement par centrifugation.

Afin d'assurer leur fixation, les déflecteurs sont pourvus de pions 7 s'étendant en direction axiale et pénétrant dans des alésages 6 formés dans le corps de la bague intérieure 1. Les pions 7 sont équipés de moyens d'accrochage élastique qui seront décrits par la suite. Les alésages 6 s'étendent parallèlement à l'axe géométrique A du roulement à partir d'une face latérale extérieure de la bague intérieure et sont equi-répartis sur le corps de la bague intérieure 1, le long d'un cercle coaxial à l'axe géométrique A du roulement.

Dans un premier mode de réalisation, illustré sur les figures 1 à 3 et 5, les alésages sont traversant et ouverts sur les deux faces latérales extérieures de la bague intérieure, les deux déflecteurs 5a, 5b étant fixés l'un à l'autre au travers des alésages 6. Pour ce faire, les pions 7 d'un premier déflecteur 5a sont équipés de moyens d'accroche élastiques destinés à coopérer avec les moyens d'accroche élastique des pions 7 de l'autre déflecteur 5b.

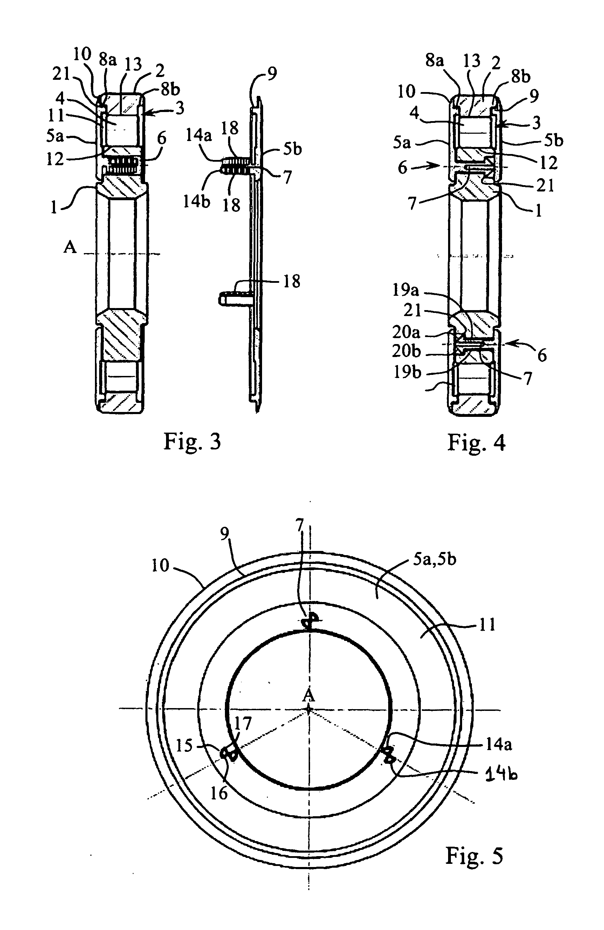

Dans le mode de réalisation représenté de façon détaillée sur la figure 5, les pions présentent deux portions 14a, 14b, chaque portion 14a, 14b étant en quart de cylindre s'étendant dans la direction axiale du roulement. Ces portions 14a, 14b présentent une première surface 16 s'étendant dans un plan radial du roulement, une seconde surface 17 s'étendant dans un plan perpendiculaire audit plan radial et une surface extérieure 15 cylindrique venant en vis à vis de la paroi de l'alésage 6. La première 16 et la seconde 17 surface sont équipées d'ailettes élastiques 18 « en sapin » destinées à coopérer avec des ailettes similaires 18 équipant les pions 7 de l'autre déflecteur. Les ailettes élastiques « en sapin » 18 comprennent une première surface formant une rampe d'introduction et une seconde surface de butée s'étendant perpendiculairement à la première 16 ou à la seconde 17 surface. Lorsque les pions 7 de deux déflecteurs 5a, 5b, venant en vis-à-vis, sont engagés dans l'alésage 6, les ailettes élastiques 18 se déforment de sorte à permettre l'emboîtement des pions 7. Par la suite, les surfaces de butée des ailettes 18 coopèrent de sorte qu'il ne soit plus possible de désolidariser les déflecteurs 5a, 5b.

Ce mode de réalisation est particulièrement avantageux en ce que les moyens d'accroche sont « réversibles ». On entend ici par réversible le fait que les moyens d'accroches des deux déflecteurs sont identiques et peuvent ainsi être indifféremment être introduits par l'une ou l'autre des extrémités de l'alésage 6. Ainsi, les déflecteurs 5a, 5b s'étendant de part et d'autre des bagues 1, 2 peuvent également être identiques, ce qui simplifie bien évidemment les opérations de fabrication et de montage des déflecteurs 5a, 5b sur le roulement.

On notera que, dans le mode de réalisation représenté sur les figures 1 à 3 et 5, la bague intérieure 2 présente trois alésages 6 débouchants. Toutefois, l'invention n'est pas limitée à ce mode de réalisation et la bague intérieure 1 pourra, bien sur, présenter un nombre plus différent d'alésages 6 sans pour autant sortir du cadre de l'invention.

Selon une autre réalisation, on pourra également prévoir de fixer le déflecteur 5a, 5b directement sur la bague intérieure 1. Dans le mode illustré sur la figure 4, les pions 7 comportent deux pattes élastiques 19a, 19b dont les extrémités libres sont pourvues d'un crochet de retenue 20a, 20b venant coopérer avec un épaulement de butée 21 formé à l'intérieur de l'alésage 6. Lorsque les pions 7 sont introduits dans les alésages 6, les pattes 19a, 19b se déforment élastiquement de sorte à permettre le passage du crochet de retenue 20a, 20b au travers de l'alésage 6. Lorsque le pion 7 atteint sa position de fixation, le crochet de retenue 20a, 20b coopère avec l'épaulement de butée 21 de sorte qu'il ne soit plus possible de désengager les pions 7 de l'alésage 6.

Par ailleurs, on notera que, dans ce mode de réalisation, une moitié des alésages 6 formés dans la bague intérieure 1 est destinée à revoir les pions 7 d'un premier déflecteur 5a alors que l'autre moitié des alésages 6 est destinée à recevoir les pions 7 du second déflecteur 5b.

Afin de garantir un maintien axial relatif, les déflecteurs 5a, 5b s'étendent radialement de la bague intérieure 1 jusqu'à la bague extérieure 2 et sont en contact avec la bague intérieure 1 et la bague extérieure 2.

Par ailleurs, afin de garantir l'étanchéité de l'espace de roulement 3, la bague extérieure 2 présente, de part et d'autre de l'espace de roulement, deux épaulements 8a, 8b annulaires d'étanchéité. Les épaulements annulaires 8a, 8b sont formés par un renflement latéral formé à la périphérie de la bague extérieure 2. L'épaulement 8a, 8b présente une surface cylindrique ou tronconique d'étanchéité sans contact.

Le déflecteur 5a, 5b présente, sur sa face intérieure, une surface annulaire 21 disposée en regard de ladite surface d'étanchéité sans contact. Le déflecteur 5a, 5b présente, en outre, une lèvre radiale 10 qui s'étend sensiblement jusqu'à l'extrémité radiale de la bague extérieure 2. La lèvre radiale 10 et la surface annulaire 21 forme avec la surface d'étanchéité de l'épaulement 8a, 8b un chicanage permettant de garantir l'étanchéité.

En outre, on note également que la lèvre radiale 10 du déflecteur 5a, 5b vient en contact avec la bague extérieure 2 de sorte à garantir l'étanchéité de l'espace de roulement 3 et à positionner élastiquement la bague extérieure par rapport à la bague intérieure.

Les déflecteurs 5a, 5b présentent en outre une cavité 11 annulaire de réception d'un lubrifiant. Cette cavité 11 borde les extrémités latérales de l'espace de roulement 3 et, donc, le flanc correspondant des rouleaux 4. Avantageusement, la cavité 11 reçoit une garniture solide de lubrification, non représentée, qui remplit complètement l'espace libre entre les corps roulants 4, d'une part, et entre les corps roulants 4 et les déflecteurs 5a, 5b, d'autre part. La garniture solide de lubrification présente donc une forme annulaire dont les extrémités latérales sont guidées axialement par les déflecteurs 5a, 5b.

La garniture de lubrification est constituée dans un matériau formé d'une matrice polymère comprenant des pores dans lesquels un lubrifiant se trouve emprisonné. Le polymère peut par exemple être à base de polyéthylène et le lubrifiant être une huile, une graisse ou un mélange d'huile et de graisse. Lors du fonctionnement du roulement, la matrice poreuse permet d'alimenter de manière continue le lubrifiant à l'interface entre les rouleaux 4 et les bagues 1, 2.

Par ailleurs, les déflecteurs 5a, 5b sont réalisés dans une matière pastique présentant un faible coefficient de friction de sorte à être adaptés aux frottements avec les bagues 1, 2, qui sont généralement fabriquées en acier afin de procurer au roulement une bonne résistance mécanique. Parmi les matériaux envisageables, citons notamment un composite constitué de polyoxyméthylène (POM) et de polytétrafluoroéthylène (PTFE) et un polyamide 6-6 comportant une charge de disulfite de molybdène, qui sont des matériaux particulièrement adaptés pour cette application.

Le roulement selon l'invention est particulièrement adapté à un assemblage articulé tel que l'on en trouve dans les mécaniques d'armure pour la formation de la foule sur les métiers à tisser, ce type d'assemblage articulé ayant pour fonction de transmettre le mouvement oscillant d'un bras oscillant de la mécanique à un système de tirage associé aux cadres de lisse du métier à tisser. Ce type d'assemblage est constitué d'une agrafe assemblée de manière réglable au bras oscillant de la mécanique et d'une bielle d'attaque du système de tirage, ces deux pièces étant articulées par un palier à roulement. De tels assemblages sont notamment décrits dans les demandes de brevet EP 0 602 711 et FR 2 913 079.

Selon l'invention, l'articulation oscillante d'un métier à tisser comporte une agrafe pourvue d'un logement dans lequel est inséré la bague extérieure du roulement selon l'invention. L'articulation comporte également une bielle pourvu de deux chapes parallèles, s'étendant dans des plans perpendiculaires à l'axe géométrique de rotation du roulement et disposées axialement de part et d'autre du roulement, en regard et à distance des déflecteurs 5a, 5b et de la bague extérieure 2 et fixées à la bague intérieure 1 du roulement.

L'invention est décrite dans ce qui précède à titre d'exemple. Il est entendu que l'homme du métier est à même de réaliser différentes variantes de réalisation de l'invention sans pour autant sortir du cadre de l'invention.

En particulier, on pourra prévoir de former les alésages de passage 6 des pions 7, dans la bague extérieure 2 lorsque ladite bague extérieure 2 présente une épaisseur radiale importante de sorte à résister à de fortes contraintes. Le contact entre les déflecteurs et la bague extérieure peut être prévu au niveau de la surface latérale de la saillie annulaire des déflecteurs.

Si seul le maintien axial des bague est recherché, et si l'étanchéité du roulement n'est pas un enjeu dans l'application envisagée du roulement, la face latérale du déflecteur en contact avec la bague extérieure n'est pas nécessairement élastique.

Inversement, si la fonction de guidage est secondaire ou inexistante, on peut envisager une lèvre radiale 10 sans contact, et plus généralement une absence de contact entre le déflecteur et la bague extérieure.

L'accrochage par un système de pions venant se loger dans des alésages d'une des bagues peut être utilisé le cas échéant pour un seul déflecteur. Le nombre de pions et d'alésage peut être réduit à un le cas échéant, bien qu'en pratique, un nombre supérieur ou égal à deux, et de préférence à trois, soit préféré. Les corps roulants peuvent le cas échéant être des billes ou des rouleaux coniques. On peut notamment envisager une application pour la fixation d'un déflecteur unique d'un roulement à billes à contact oblique.

## Revendications

1. Roulement comportant une bague intérieure (1) et une bague extérieure (2) coaxiales formant entre elles un espace de roulement (3) dans lequel des corps roulants (4) sont disposés pour permettre la rotation relative desdites bagues intérieure (1) et extérieure (2), au moins un déflecteur (5a, 5b) annulaire fixe par rapport à l'une desdites bagues, dite de référence, le déflecteur s'étendant radialement jusqu'à une face latérale extérieure de l'autre bague (1,2) pour fermer latéralement au moins partiellement l'espace de roulement , ledit roulement étant **caractérisé en ce que** la bague de référence (1, 2) comporte au moins un alésage (6) et **en ce que** le déflecteur (5a, 5b) comporte au moins un pion (7) équipé de moyens d'accrochage élastique pénétrant dans ledit alésage (6) de sorte à fixer ledit déflecteur (5a, 5b).

2. Roulement selon la revendication 1, **caractérisé en ce qu'**il comporte un premier et un second déflecteurs (5a, 5b) s'étendant de part et d'autre des bagues (1, 2) et présentant chacun au moins un pion (7) équipé de moyens d'accrochage élastique.

3. Roulement selon la revendication 2, **caractérisé en ce que** le premier et le second déflecteurs (5a, 5b) sont solidarisés l'un à l'autre, des moyens d'accrochage élastique du premier déflecteur (5a) coopérant au travers dudit alésage (6) avec des moyens d'accrochage élastique du second déflecteur (5b).

4. Roulement selon la revendication 1 ou 2, **caractérisé en ce que** les moyens d'accrochage élastique coopèrent avec des moyens de retenue formés dans l'alésage (6).

5. Roulement selon l'une quelconque des revendications 2 ou 3, **caractérisé en ce que** le premier déflecteur est identique au second déflecteur.

6. Roulement selon l'une quelconque des revendication 1 à 5, **caractérisé en ce que** le déflecteur (5a, 5b) est en contact axial avec la surface latérale extérieure de l'autre bague (2) pour assurer un guidage axial de l'autre bague par rapport à la bague de référence.

7. Roulement selon la revendication 6, **caractérisé en ce que** le déflecteur présente une lèvre radiale (10) élastiquement déformable en direction axiale en contact axial avec la face latérale extérieure de l'autre bague (2).

8. Roulement selon l'une des revendications 1 à 7, **caractérisé en ce que** l'autre bague (2) présente au moins une surface, cylindrique ou tronconique, (8a, 8b) d'étanchéité sans contact et **en ce que** le déflecteur (5a, 5b) présente une surface annulaire en regard et à distance de la surface d'étanchéité sans contact (8a, 8b) de sorte à assurer l'étanchéité dynamique de l'espace de roulement (3).

9. Roulement selon les revendications 7 et 8, **caractérisé en ce que** ladite lèvre radiale (10) et la surface annulaire (9) du déflecteur forment avec la surface d'étanchéité sans contact (8a, 8b) un chicanage d'étanchéité.

10. Roulement selon l'une des revendications 1 à 9, **caractérisé en ce que** le déflecteur (5a, 5b) comporte une cavité (11) de réception d'un lubrifiant, bordant l'espace de roulement (3).

11. Roulement selon la revendication 10, **caractérisé en ce qu'**il comporte une garniture solide de lubrification, logée dans la cavité de réception (11) du déflecteur (5a, 5b), ladite garniture étant réalisé dans un matériau formé d'une matrice polymère solide comprenant des pores dans lesquels un lubrifiant se trouve emprisonné.

12. Roulement selon l'une des revendications 1 à 11, **caractérisé en ce qu'**il présente une pluralité d'alésages (6) équirépartis sur le corps de la bague de référence (1).

13. Roulement selon l'une des revendications 1 à 12, **caractérisé en ce que** les corps roulants (4) sont des rouleaux cylindriques.

14. Roulement selon l'une des revendications 1 à 13, **caractérisé en ce que** la bague de référence est la bague intérieure.

15. Roulement selon l'une des revendications 1 à 14, **caractérisé en ce que** le déflecteur présente un diamètre extérieur supérieur ou égal au diamètre extérieur de la bague extérieure.

16. Articulation oscillante d'un métier à tisser comportant :
- une agrafe pourvue d'un logement ;
- un roulement selon l'une quelconque des revendications précédentes, dont la bague extérieure (2) est disposée dans le logement de l'agrafe ; et
- une bielle comportant deux chapes latérales, les deux chapes s'étendant dans des plans perpendiculaires à l'axe de rotation et étant disposées axialement de part et d'autre du roulement, en regard et à distance des déflecteurs et de la bague extérieure et fixées à la bague intérieure du roulement.

## Claims

1. Roller bearing comprising an inner ring (1) and an outer ring (2), coaxial with each other, forming between them a rolling space (3) in which rolling bodies (4) are disposed to allow relative rotation of said inner (1) and outer (2) rings, at least one annular deflector (5a, 5b) fixed with respect to one of said rings, referred to as the reference ring, the deflector extending radially as far as an external lateral face of the other ring (1, 2) in order to at least partially close off the rolling space laterally, said roller bearing being **characterised in that** the reference ring (1, 2) comprises at least one bore (6) and **in that** the deflector (5a, 5b) comprises at least one pin (7) equipped with elastic attachment means entering said bore (6) so as to fix said deflector (5a, 5b).

2. Roller bearing according to claim 1, **characterised in that** it comprises first and second deflectors (5a, 5b) extending on either side of the rings (1, 2) and each having at least one pin (7) equipped with elastic attachment means.

3. Roller bearing according to claim 2, **characterised in that** the first and second deflectors (5a, 5b) are secured to each other, elastic attachment means of the first deflector (5a) cooperating through said bore (6) with elastic attachment means of the second deflector (5b).

4. Roller bearing according to claim 1 or 2, **characterised in that** the elastic attachment means cooperate with retaining means formed in the bore (6).

5. Roller bearing according to either one of claims 2 or 3, **characterised in that** the first deflector is identical to the second deflector.

6. Roller bearing according to any one of claims 1 to 5, **characterised in that** the deflector (5a, 5b) is in axial contact with the external lateral surface of the other ring (2) in order to provide axial guidance of the other ring with respect to the reference ring.

7. Roller bearing according to claim 6, **characterised in that** the deflector has a radial lip (10) elastically deformable in the axial direction in axial contact with the external lateral face of the other ring (2).

8. Roller bearing according to one of claims 1 to 7, **characterised in that** the other ring (2) has at least one contactless sealing surface (8a, 8b), cylindrical or frustoconical, and **in that** the deflector (5a, 5b) has an annular surface facing and at a distance from the contactless sealing surface (8a, 8b) so as to ensure the dynamic sealing of the roller bearing space (3).

9. Roller bearing according to claims 7 and 8, **characterised in that** said radial lip (10) and the annular surface (9) of the deflector form a sealing labyrinth with the contactless sealing surface (8a, 8b).

10. Roller bearing according to one of claims 1 to 9, **characterised in that** the deflector (5a, 5b) comprises a cavity (11) for receiving a lubricant, bordering the rolling space (3).

11. Roller bearing according to claim 10, **characterised in that** it comprises a solid lubrication lining, housed in the reception cavity (11) of the deflector (5a, 5b), said lining being produced from a material formed from a solid polymer matrix comprising pores in which a lubricant is trapped.

12. Roller bearing according to one of claims 1 to 11, **characterised in that** it has a plurality of bores (6) equally distributed on the body of the reference ring (1).

13. Roller bearing according to one of claims 1 to 12, **characterised in that** the rolling bodies (4) are cylindrical rollers.

14. Roller bearing according to one of claims 1 to 13, **characterised in that** the reference ring is the inner ring.

15. Roller bearing according to one of claims 1 to 14, **characterised in that** the deflector has an outside diameter greater than or equal to the outside diameter of the outer ring.

16. Oscillating articulation of a weaving loom, comprising:
- a clamp provided with a housing;
- a roller bearing according to any one of the preceding claims, the outer ring (2) of which is disposed in the housing of the clamp; and
- a link comprising two lateral brackets, said brackets extending in planes perpendicular to the rotation axis and being disposed axially on either side of the roller bearing, opposite and at a distance from the deflectors of the outer ring and fixed to the inner ring of the roller bearing.

## Patentansprüche

1. Wälzlager umfassend einen Innenring (1) und einen Außenring (2), die koaxial angeordnet sind und zwischen sich einen Lagerinnenraum (3) bilden, in dem Wälzkörper (4) angeordnet sind, um die relative Drehung des besagten Innenrings (1) und Außenrings (2) zu ermöglichen, zumindest einen ringförmigen Abweiser (5a, 5b), der in Bezug zu dem einen der genannten Ringe, dem sogenannten Bezugsring, feststehend ist, wobei sich der Abweiser radial bis zu einer äußeren Seitenfläche des anderen Ringes (1, 2) erstreckt, um den Lagerinnenraum seitlich zumindest teilweise zu schließen, wobei das besagte Wälzlager **dadurch gekennzeichnet ist, dass** der Bezugsring (1, 2) zumindest eine Bohrung (6) umfasst, und **dadurch**, dass der Abweiser (5a, 5b) zumindest einen Stift (7) umfasst, der mit elastischen Kopplungsvorrichtungen ausgestattet ist, die in die besagte Bohrung (6) führen, um den besagten Abweiser (5a, 5b) zu fixieren.

2. Wälzlager nach Anspruch 1, **dadurch gekennzeichnet, dass** es einen ersten und einen zweiten Abweiser (5a, 5b) umfasst, die sich beiderseits der Ringe (1, 2) erstrecken und jeweils zumindest einen Stift (7) aufweisen, der mit elastischen Kopplungsvorrichtungen ausgestattet ist.

3. Wälzlager nach Anspruch 2, **dadurch gekennzeichnet, dass** der erste und der zweite Abweiser (5a, 5b) fest mit einander verbunden sind, und elastische Kopplungsvorrichtungen des ersten Abweisers (5a) durch die besagte Bohrung (6) mit elastischen Kopplungsvorrichtungen des zweiten Abweisers (5b) zusammenwirken.

4. Wälzlager nach Anspruch 1 oder 2, **dadurch gekennzeichnet, dass** die elastischen Kopplungsvorrichtungen mit den Rückhaltevorrichtungen zusammenwirken, die in der Bohrung (6) ausgebildet sind.

5. Wälzlager nach irgendeinem der Ansprüche 2 oder 3, **dadurch gekennzeichnet, dass** der erste Abweiser und der zweite Abweiser identisch sind.

6. Wälzlager nach irgendeinem der Ansprüche 1 bis 5, **dadurch gekennzeichnet, dass** der Abweiser (5a, 5b) in axialem Kontakt mit der äußeren Seitenfläche des anderen Ringes (2) steht, um eine Axialführung des anderen Ringes im Verhältnis zum Bezugsring zu gewährleisten.

7. Wälzlager nach Anspruch 6, **dadurch gekennzeichnet, dass** der Abweiser eine elastisch verformbare radiale Lippe (10) in Axialrichtung umfasst, die in axialem Kontakt mit der äußeren Seitenfläche des anderen Ringes (2) steht.

8. Wälzlager nach einem der Ansprüche 1 bis 7, **dadurch gekennzeichnet, dass** der andere Ring (2) zumindest eine berührungslose zylindrische oder konische Dichtfläche (8a, 8b) aufweist und **dadurch**, dass der Abweiser (5a, 5b) eine ringförmige Fläche gegenüber und auf Abstand zur berührungslosen Dichtfläche (8a, 8b) aufweist, sodass die dynamische Dichtheit des Lagerinnenraumes (3) gewährleistet ist.

9. Wälzlager mach den Ansprüchen 7 und 8, **dadurch gekennzeichnet, dass** die besagte radiale Lippe (10) und die Ringfläche (9) des Abweisers mit der berührungslosen Dichtfläche (8a, 8b) eine Dichtschikane ausbilden.

10. Wälzlager nach einem der Ansprüche 1 bis 9, **dadurch gekennzeichnet, dass** der Abweiser (5a, 5b) eine Vertiefung (11) zur Aufnahme eines Schmiermittels umfasst, die den Lagerinnenraum (3) einfasst.

11. Wälzlager nach Anspruch 10, **dadurch gekennzeichnet, dass** es einen festen Schmierbelag umfasst, der in der Aufnahmevertiefung (11) des Abweisers (5a, 5b) sitzt, wobei der besagte Belag aus einem Material gebildet wird, das aus einer festen Polymer-Matrize geformt ist, umfassend Poren, in denen ein Schmiermittel eingeschlossen ist.

12. Wälzlager nach einem der Ansprüche 1 bis 11, **dadurch gekennzeichnet, dass** es eine Vielzahl von Bohrungen (6) umfasst, die gleichförmig über den Korpus des Bezugsringes (1) verteilt sind.

13. Wälzlager nach einem der Ansprüche 1 bis 12, **dadurch gekennzeichnet, dass** die Wälzkörper (4) zylindrische Walzen sind.

14. Wälzlager nach einem der Ansprüche 1 bis 13, **dadurch gekennzeichnet, dass** der Bezugsring der Innenring ist.

15. Wälzlager nach einem der Ansprüche 1 bis 14, **dadurch gekennzeichnet, dass** der Abweiser einen Außendurchmesser größer oder gleich dem Außendurchmesser des Außenrings aufweist.

16. Schwinggelenk eines Webstuhls umfassend:
- eine Spange mit einer Aufnahme;
- ein Wälzlager nach irgendeinem der vorherigen Ansprüche, dessen Außenring (2) in der Aufnahme der Spange angeordnet ist;
und
- eine Kurbelstange umfassend zwei seitliche Gabelköpfe, wobei sich die beiden Gabelköpfe über die zur Drehachse senkrechten Ebenen erstrecken, und axial beiderseits des Wälzlagers, in einem Abstand gegenüber den Abweisern und dem Außenring angeordnet, und am Innenring des Wälzlagers befestigt sind.
